(19) Europäisches Patentamt
European Patent Office
Office européen des brevets

(11) EP 0 722 956 B1

(12) **EUROPÄISCHE PATENTSCHRIFT**

(45) Veröffentlichungstag und Bekanntmachung des Hinweises auf die Patenterteilung:
**16.08.2001 Patentblatt 2001/33**

(51) Int Cl.[7]: **C08F 10/00**, C08F 4/60

(21) Anmeldenummer: **96100539.4**

(22) Anmeldetag: **01.11.1991**

(54) **Verfahren zur Herstellung eines Olefinpolymers**

Process for the preparation of an olefin polymer

Procédé de préparation d'un polymère d'oléfine

(84) Benannte Vertragsstaaten:
**BE DE ES FR GB IT NL**

(30) Priorität: **12.11.1990 DE 4035885**

(43) Veröffentlichungstag der Anmeldung:
**24.07.1996 Patentblatt 1996/30**

(62) Dokumentnummer(n) der früheren Anmeldung(en) nach Art. 76 EPÜ:
**91118679.9 / 0 485 820**

(73) Patentinhaber: **Basell Polyolefine GmbH**
**77694 Kehl (DE)**

(72) Erfinder:
- **Winter, Andreas, Dr.**
  **D-61479 Glashütten (DE)**
- **Antberg, Martin, Dr.**
  **D-65719 Hofheim (DE)**
- **Spaleck, Walter, Dr.**
  **D-65835 Liederbach (DE)**
- **Rohrmann, Jürgen, Dr.**
  **D-65779 Kelkheim (DE)**
- **Dolle, Volker, Dr.**
  **D-64625 Bensheim (DE)**

(74) Vertreter: **Siebzehnrübl, Florian, Dr. et al**
**BASF Aktiengesellschaft**
**Patentabteilung ZDX/A - C 6**
**67056 Ludwigshafen (DE)**

(56) Entgegenhaltungen:
**EP-A- 0 347 129** **EP-A- 0 485 821**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 722 956 B1

Printed by Jouve, 75001 PARIS (FR)

## Beschreibung

Die Erfindung bezieht sich auf ein Verfahren zur Herstellung von Olefinpolymeren mit enger Molmassenverteilung und hoher Isotaktizität.

Aus der Literatur sind lösliche Metallocenverbindungen auf Basis von Bis(cyclopentadienyl)zirkon-alkyl bzw. -halogenid in Kombination mit oligomeren Aluminoxanen bekannt. Mit diesen Systemen können Ethylen und Propylen mit mäßiger Aktivität polymerisiert werden, man erhält jedoch kein isotaktisches Polypropylen. Die so hergestellten Polypropylene sind amorph und haben deshalb keinen definierten Schmelzpunkt.

Weiterhin ist von dem Katalysatorsystem Bis(cyclopentadienyl)titandiphenyl/Methylaluminoxan bekannt, daß es Propylen in Stereoblockpolymere, d.h. Polypropylen mit mehr oder weniger langen isotaktischen Sequenzen, umzuwandeln vermag (vgl. US-PS 4,522,982). Deutliche Nachteile dieses Katalysatorsystems sind die großtechnisch irrelevanten Polymerisationstemperaturen (0 °C bis -60 °C), die völlig unbefriedigenden Katalysatoraktivitäten und die im Vergleich zu großtechnisch mit Heterogenkatalysatorsystemen auf $MgCl_2/TiCl_4$-Katalysatorbasis hergestelltem Polypropylen zu niedrig liegenden Schmelzpunkte der Polypropylenprodukte.

Die Herstellung von isotaktischem Polypropylen gelingt mit Hilfe des Ethylen-bis(4,5,6,7-tetrahydro-1-indenyl) zirkondichlorids zusammen mit einem Aluminoxan in einer Suspensionspolymerisation (vgl. EP-A 185 918). Das Polymer besitzt eine enge Molmassenverteilung, was für bestimmte Anwendungen, beispielsweise für den Hochleistungsspritzguß, von Vorteil ist.

Neben einer Reihe anderer Mängel wie zu hiedrige Metallocenaktivitäten oder schlechte Produktmorphologie liegen die Schmelzpunkte auch dieser Polypropylene zu niedrig, d.h. ihre Kristallinität und somit ihre Härte sind für einen Einsatz des Polymers als Konstruktionswerkstoff noch zu gering.

EP-A-0 366 290 beschreibt ein Verfahren zur Herstellung von Olefinpolymeren in Gegenwart eines Katalysators welcher Ethylenbis(2,3-dimethyl-1-indenyl)zirkoniumdichlorid und ein Aluminoxan als Cocatalysator umfassen kann. Das Verfahren kann in flüssiger Phase bei einem Druck von 1-70 $kg/cm^2$ und einer Temperatur von -50 bis 230 °C durchgeführt werden.

Es wurde auch eine spezielle Voraktivierungsmethode des Metallocens mit einem Aluminoxan vorgeschlagen, welche zu einer beachtlichen Steigerung der Aktivität des Katalysatorsystems und zu einer deutlichen Verbesserung der Kornmorphologie des Polymeren führt (vgl. DE 37 26 067).

Eine entscheidende Verbesserung der Schmelzpunkte, Kristallinitäten und Härten der so hergestellten Polymere ist dadurch aber nicht zu erreichen.

Diese Eigenschaften besitzen jedoch für den Einsatz von Polymeren als Konstruktionswerkstoffe (z.B. Großhohlkörper, Rohre, Formteile) große Bedeutung.

Es bestand die Aufgabe, ein Verfahren und einen Katalysator zu finden, mittels dessen bei hoher Aktivität Polymere enger Molmassendispersität und hoher Stereospezifität mit höherem Schmelzpunkt und somit höherer Kristallinität und höherer Härte hergestellt werden können.

Es wurde gefunden, daß unter Verwendung von in der Ligandsphäre in bestimmter Weise substituierten, verbrückten Metallocensystemen diese Aufgabe gelöst werden kann.

Die Erfindung betrifft somit ein Verfahren zur Herstellung eines Olefinpolymers durch Polymerisation oder Copolymerisation eines Olefins der Formel $R^a$-CH=CH-$R^b$, worin $R^a$ und $R^b$ gleich oder verschieden sind und ein Wasserstoffatom oder einen Kohlenwasserstoffrest mit 1 bis 14 C-Atomen bedeuten, oder $R^a$ und $R^b$ mit den sie verbindenden Atomen einen Ring bilden können, bei einer Temperatur von -60 bis 200 °C, bei einem Druck von 0,5 bis 100 bar, in Lösung, in Suspension oder in der Gasphase, in Gegenwart eines Katalysators, welcher aus einem Metallocen als Übergangsmetallverbindung und einem Aluminoxan der Formel (II)

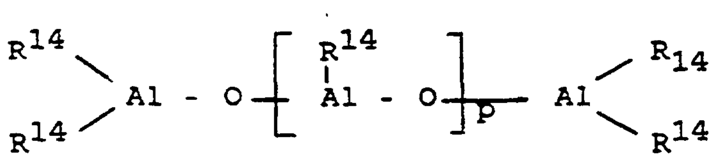

(II)

für den linearen Typ und/oder der Formel III

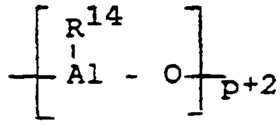 (III)

für den cyclischen Typ,

wobei in den Formeln (II) und (III) die Reste $R^{14}$ gleich oder verschieden sein können und eine $C_1$-$C_6$-Alkylgruppe, eine $C_6$-$C_{18}$-Arylgruppe oder Wasserstoff bedeuten und p eine ganze Zahl von 2 bis 50 bedeutet, besteht, dadurch gekennzeichnet, daß das Metallocen eine Verbindung der Formel Ia ist,

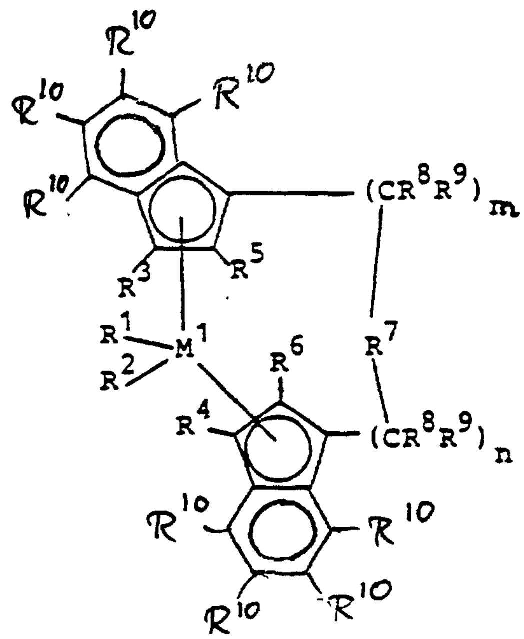

(Ia)

worin

$M^1$ ein Metall der Gruppe IVb, Vb oder VIb des Periodensystems ist,

$R^1$ und $R^2$ gleich oder verschieden sind und ein Wasserstoffatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe oder ein Halogenatom bedeuten,

$R^3$ und $R^4$ gleich oder verschieden sind und ein Wasserstoffatom, ein Halogenatom, eine $C_1$-$C_{10}$-Alkylgruppe, die halogeniert sein kann, eine $C_6$-$C_{10}$-Arylgruppe, einen $-NR_2^{15}$, $-SR^{15}$, $-OSiR_3^{15}$, $-SiR_3^{15}$ oder $-PR_2^{15}$-Rest bedeuten, worin $R^{15}$ ein Halogenatom, eine $C_1$-$C_{10}$-Alkylgruppe oder eine $C_6$-$C_{10}$-Arylgruppe ist,

$R^5$ und $R^6$ gleich oder verschieden sind und die für $R^3$ und $R^4$ genannte Bedeutung haben, mit der Maßgabe, daß $R^5$ und $R^6$ nicht Wasserstoff sind,

$R^7$

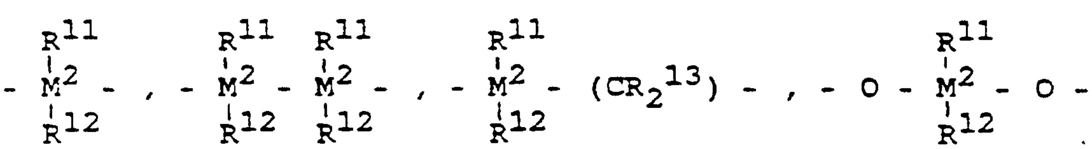

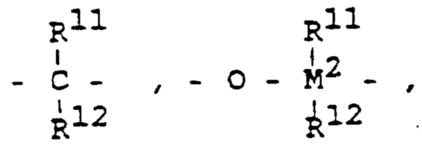

$=BR^{11}$, $=AlR^{11}$, -Ge-, -Sn-, -O-, -S-, =SO, $=SO_2$, $=NR^{11}$, =CO, $=PR^{11}$ oder $=P(O)R^{11}$ ist,

wobei

$R^{11}$, $R^{12}$ und $R^{13}$ gleich oder verschieden sind und ein Wasserstoffatom, ein Halogenatom, eine $C_1$-$C_{10}$-Alkylgruppe, $C_1$-$C_{10}$-Fluoralkylgruppe, eine $C_6$-$C_{10}$-Arylgruppe, eine $C_6$-$C_{10}$-Fluorarylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe bedeuten oder $R^{11}$ und $R^{12}$ oder $R^{11}$ und $R^{13}$ jeweils mit den sie verbindenden Atomen einen Ring bilden,

$M^2$ Silizium, Germanium oder Zinn ist,

$R^8$ und $R^9$ gleich oder verschieden sind und die für $R^{11}$ genannte Bedeutung haben,

m und n gleich oder verschieden sind und null, 1 oder 2 sind, wobei m plus n null, 1 oder 2 ist, und die Reste $R^{10}$ gleich oder verschieden sind und die für $R^{11}$ $R^{12}$ und $R^{13}$ genannte Bedeutung haben, und wobei Ethylen-bis(2,3-dimethyl-1-indenyl)zirkoniumdichlorid als Metallocen ausgenommen ist.

Alkyl steht für geradkettiges oder verzweigtes Alkyl. Halogen (halogeniert) bedeutet Fluor, Chlor, Brom oder Jod, bevorzugt Fluor oder Chlor.

Gegenstand der vorliegenden Erfindung sind ferner die nach dem beschriebenen Verfahren hergestellten Polyolefine.

Der für das erfindungsgemäße Verfahren zu verwendende Katalysator besteht aus einem Aluminoxan und einem Metallocen der Formel (Ia)

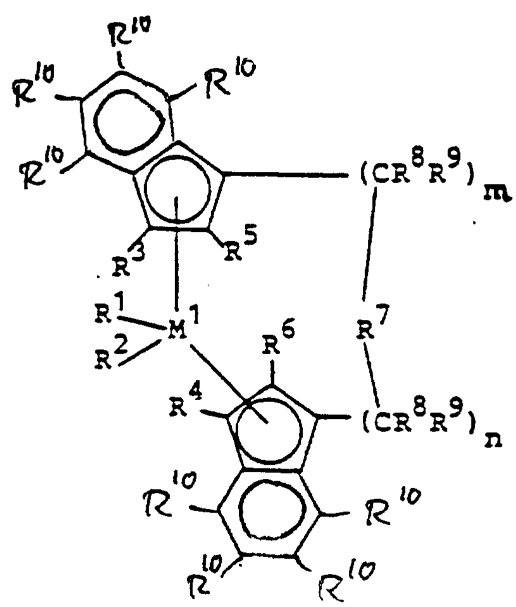

(Ia)

In Formel I ist $M^1$ ein Metall der Gruppe IVb, Vb oder VIb des Periodensystems, beispielsweise Titan, Zirkon, Hafnium, Vanadium, Niob, Tantal, Chrom, Molybdän, Wolfram, vorzugsweise Zirkon, Hafnium und Titan.

$R^1$ und $R^2$ sind gleich oder verschieden und bedeuten ein Wasserstoffatom, eine $C_1$-$C_{10}$-, vorzugsweise $C_1$-$C_3$-Alkylgruppe, eine $C_1$-$C_{10}$-, vorzugsweise $C_1$-$C_3$-Alkoxygruppe, eine $C_6$-$C_{10}$-, vorzugsweise $C_6$-$C_8$-Arylgruppe, eine

$C_6$-$C_{10}$-, vorzugsweise $C_6$-$C_8$-Aryloxygruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_7$-$C_{40}$-, vorzugsweise $C_7$-$C_{12}$-Alkylarylgruppe, eine $C_8$-$C_{40}$-, vorzugsweise $C_8$-$C_{12}$-Arylalkenylgruppe oder ein Halogenatom, vorzugsweise Chlor.

$R^3$ und $R^4$ sind gleich oder verschieden und bedeuten ein Wasserstoffatom, ein Halogenatom, bevorzugt ein Fluor-, Chlor- oder Bromatom, eine $C_1$-$C_{10}$-, vorzugsweise $C_1$-$C_4$-Alkylgruppe, die halogeniert sein kann, eine $C_6$-$C_{10}$-, vorzugsweise $C_6$-$C_8$-Arylgruppe, einen $-NR_2^{15}$, $-SR^{15}$, $-OSiR_3^{15}$, $-SiR_3^{15}$, oder $-PR_2^{15}$-Rest, worin $R^{15}$ ein Halogenatom, vorzugsweise Chloratom, oder eine $C_1$-$C_{10}$-, vorzugsweise $C_1$-$C_3$-Alkylgruppe oder $C_6$-$C_{10}$-, vorzugsweise $C_6$-$C_8$-Arylgruppe ist. Besonders bevorzugt sind $R^3$ und $R^4$ Wasserstoff.

$R^5$ und $R^6$ sind gleich oder verschieden, bevorzugt gleich, und haben die für $R^3$ und $R^4$ beschriebene Bedeutung, mit der Maßgabe, daß $R^5$ und $R^6$ nicht Wasserstoff sein dürfen. Bevorzugt sind $R^5$ und $R^6$ ($C_1$-$C_4$)-Alkyl, das halogeniert sein kann, wie Methyl, Ethyl, Propyl, Isopropyl, Butyl, Isobutyl oder Trifluormethyl, insbesondere Methyl.

$R^7$ ist

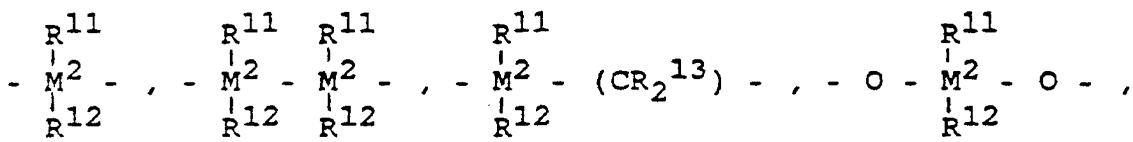

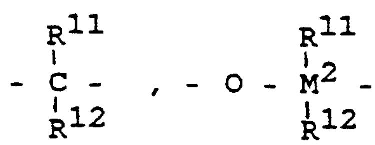

$=BR^{11}$, $=AlR^{11}$, -Ge-, -Sn-, -O-, -S-, =SO, $=SO_2$, $=NR^{11}$, =CO, $=PR^{11}$ oder $=P(O)R^{11}$, wobei $R^{11}$, $R^{12}$ und $R^{13}$ gleich oder verschieden sind und ein Wasserstoffatom, ein Halogenatom, eine $C_1$-$C_{10}$-, vorzugsweise $C_1$-$C_4$-Alkylgruppe, insbesondere Methylgruppe, eine $C_1$-$C_{10}$-Fluoralkylgruppe, vorzugsweise $CF_3$-Gruppe, eine $C_6$-$C_{10}$-, vorzugsweise $C_6$-$C_8$-Arylgruppe, eine $C_6$-$C_{10}$-Fluorarylgruppe, vorzugsweise Pentafluorphenylgruppe, eine $C_1$-$C_{10}$-, vorzugsweise $C_1$-$C_4$-Alkoxygruppe, insbesondere Methoxygruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_8$-$C_{40}$-, vorzugsweise $C_8$-$C_{12}$-Arylalkenylgruppe oder eine $C_7$-$C_{40}$-, vorzugsweise $C_7$-$C_{12}$-Alkylarylgruppe bedeuten, oder $R^{11}$ und $R^{12}$ oder $R^{11}$ und $R^{13}$ bilden jeweils zusammen mit den sie verbindenden Atomen einen Ring.

$M^2$ ist Silizium, Germanium oder Zinn, bevorzugt Silizium und Germanium.

$R^7$ ist vorzugsweise $=CR^{11}R^{12}$, $=SiR^{11}R^{12}$, $=GeR^{11}R^{12}$, -O-, -S-, =SO, $=PR^{11}$ oder $=P(O)R^{11}$.

$R^8$ und $R^9$ sind gleich oder verschieden und haben die für $R^{11}$ genannte Bedeutung.

m und n sind gleich oder verschieden und bedeuten null, 1 oder 2, bevorzugt null oder 1, wobei m plus n null, 1 oder 2, bevorzugt null oder 1 ist.

Die Reste $R^{10}$ sind gleich oder verschieden und haben die für $R^{11}$, $R^{12}$ und $R^{13}$ genannte Bedeutung. Bevorzugt sind die Reste $R^{10}$ Wasserstoffatome oder eine $C_1$-$C_{10}$-, vorzugsweise $C_1$-$C_4$-Alkylgruppe.

Somit sind die besonders bevorzugten Metallocene die Verbindungen der Formeln A, B und C

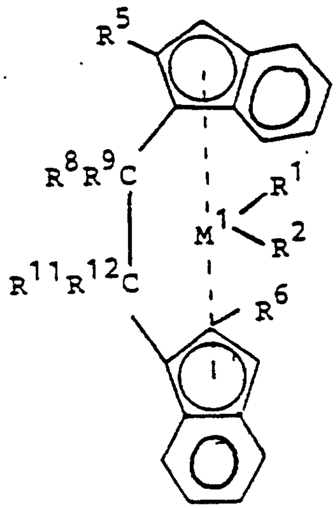 (A), 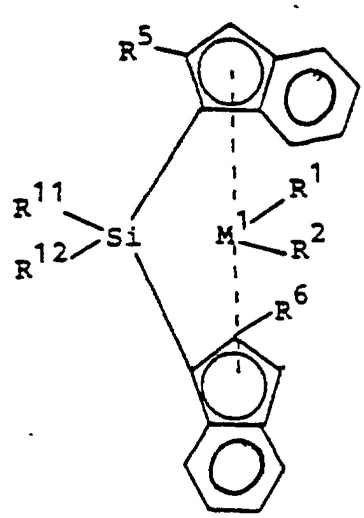 (B),

mit

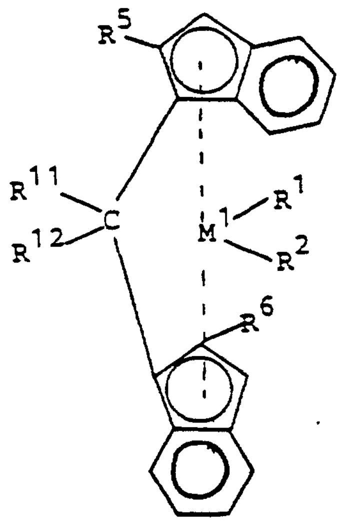 (C),

$M^1$ = Zr, Hf; $R^1$, $R^2$ = Methyl, Chlor; $R^5$, $R^6$ = Methyl, Ethyl, Trifluormethyl und $R^8$, $R^9$, $R^{11}$ und $R^{12}$ mit den obengenannten Bedeutungen, insbesondere die in den Ausführungsbeispielen aufgeführten Verbindungen I.

Die chiralen Metallocene werden als Racemat zur Herstellung von hochisotaktischen Poly-1-olefinen eingesetzt. Verwendet werden kann aber auch die reine R- oder S-Form. Mit diesen reinen stereoisomeren Formen ist optisch aktives Polymeres herstellbar. Abgetrennt werden sollte jedoch die meso-Form der Metallocene, da das polymerisationsaktive Zentrum (das Metallatom) in diesen Verbindungen wegen Spiegelsymmetrie am Zentralmetall nicht mehr chiral ist und daher kein hochisotaktisches Polymeres erzeugen kann.

Die Trennung der Stereoisomeren ist im Prinzip bekannt.

Die vorstehend beschriebenen Metallocene können beispielsweise nach folgendem Reaktionsschema hergestellt werden:

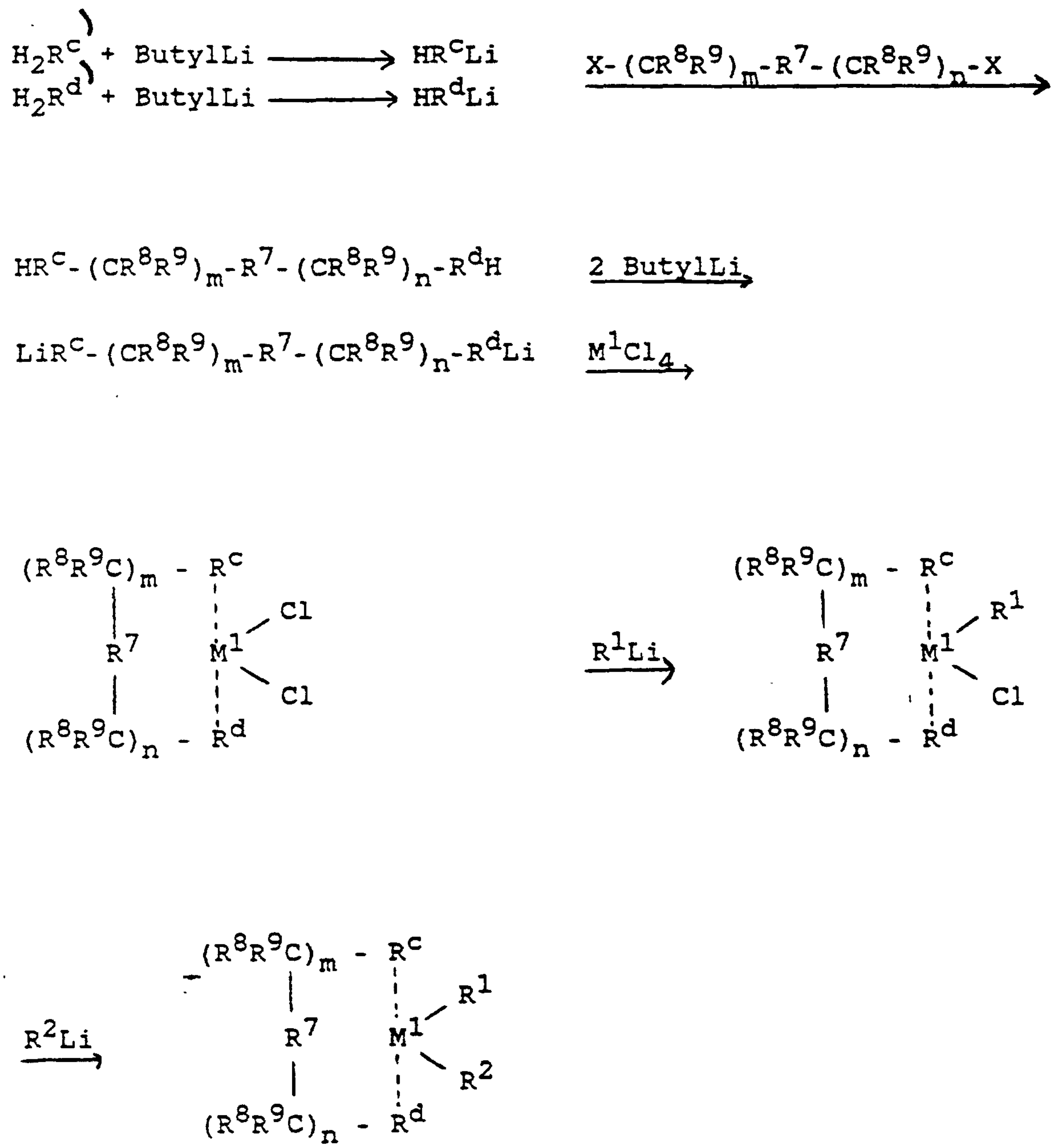


X = Cl, Br, I, O-Tosyl;

$H_2R^{c'}$ =

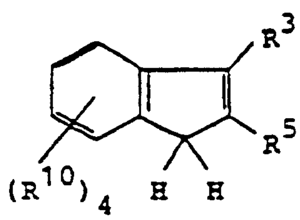

$H_2R^{d'}$ = 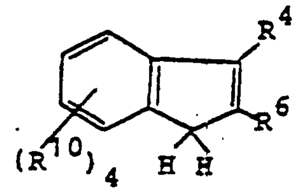

Die Herstellungsverfahren sind literaturbekannt; vgl. Journal of Organometallic Chem. 288 (1985) 63-67, EP-A 320 762 und die Ausführungsbeispiele.

Erfindungsgemäß wird als Cokatalysator ein Aluminoxan der Formel (II)

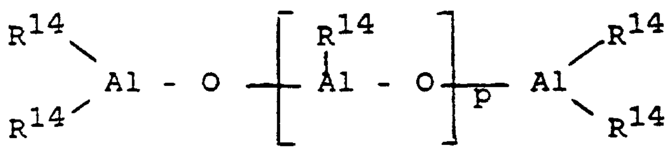 (II)

für den linearen Typ und/oder der Formel (III)

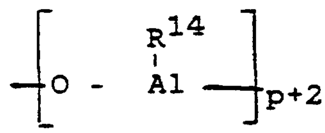 (III)

für den cyclischen Typ verwendet, wobei in den Formeln (II) und (III) die Reste $R^{14}$ gleich oder verschieden sein können und eine $C_1$-$C_6$-Alkylgruppe, eine $C_6$-$C_{18}$-Arylgruppe oder Wasserstoff bedeuten, und p eine ganze Zahl von 2 bis 50, bevorzugt 10 bis 35 bedeutet.

Bevorzugt sind die Reste $R^{14}$ gleich und bedeuten Methyl, Isobutyl, Phenyl oder Benzyl, besonders bevorzugt Methyl.

Sind die Reste $R^{14}$ unterschiedlich, so sind sie bevorzugt Methyl und Wasserstoff oder alternativ Methyl und Isobutyl, wobei Wasserstoff bzw. Isobutyl bevorzugt zu 0,01 - 40 % (Zahl der Reste $R^{14}$) enthalten sind.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z.B. Toluol) umgesetzt wird. Zur Herstellung eines Aluminoxans mit verschiedenen Alkylgruppen $R^{14}$ werden entsprechend der gewünschten Zusammensetzung zwei verschiedene Aluminiumtrialkyle ($AlR_3$ + $AlR'_3$) mit Wasser umgesetzt (vgl. S. Pasynkiewicz, Polyhedron 9 (1990) 429 und EP-A 302 424).

Die genaue Struktur der Aluminoxane II und III ist nicht bekannt.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, das Metallocen vor dem Einsatz in der Polymerisationsreaktion mit einem Aluminoxan der Formel (II) und/oder (III) vorzuaktivieren. Dadurch wird die Polymerisationsaktivität deutlich erhöht und die Kornmorphologie verbessert.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von $10^{-4}$ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78 °C bis 100 °C, vorzugsweise 0 bis 70 °C.

Das Metallocen kann auch vorpolymerisiert oder auf einen Träger aufgebracht werden. Zur Vorpolymerisation

wird bevorzugt das (oder eines der) in der Polymerisation eingesetzte(n) Olefin(e) verwendet.

Geeignete Träger sind beispielsweise Silikagele, Aluminiumoxide, festes Aluminoxan oder andere anorganische Trägermaterialien. Ein geeignetes Trägermaterial ist auch ein Polyolefinpulver in feinverteilter Form.

Eine weitere mögliche Ausgestaltung des erfindungsgemäßen Verfahrens besteht darin, daß man an Stelle oder neben eines Aluminoxans eine salzartige Verbindung der Formel $R_xNH_{4-x}BR'_4$ oder der Formel $R_3PHBR'_4$ als Cokatalysator verwendet. Dabei sind x = 1,2 oder 3, R = Alkyl oder Aryl, gleich oder verschieden, und R' = Aryl, das auch fluoriert oder teilfluoriert sein kann. In diesem Fall besteht der Katalysator aus dem Reaktionsprodukt eines Metallocens mit einer der genannten Verbindungen (vgl. EP-A 277 004 und die Herstellungsbeispiele E und F). Zur Entfernung von im Propylen vorhandener Katalysatorgifte ist eine Reinigung mit einem Aluminiumalkyl, beispielsweise $AlMe_3$ oder $AlEt_3$ vorteilhaft Diese Reinigung kann sowohl im Polymerisationssystem selbst erfolgen, oder das Propylen wird vor der Zugabe in das Polymerisationssystem mit der Al-Verbindung in Kontakt gebracht und anschließend wieder abgetrennt.

Die Polymerisation oder Copolymerisation wird in bekannter Weise in Lösung, in Suspension oder in der Casphase, kontinuierlich oder diskontinuierlich, ein- oder mehrstufig bei einer Temperatur von -60 bis 200 °C, vorzugsweise 30 bis 80 °C, durchgeführt. Polymerisiert oder copolymerisiert werden Olefine der Formel $R^a$-CH=CH-$R^b$. In dieser Formel sind Ra und $R^b$ gleich oder verschieden und bedeuten ein Wasserstoffatom oder einen Alkylrest mit 1 bis 14 C-Atomen.

$R^a$ und $R^b$ können jedoch auch mit den sie verbindenden C-Atomen einen Ring bilden. Beispiele für solche Olefine sind Ethylen, Propylen, 1-Buten, 1-Hexen, 4-Methyl-1-penten, 1-Octen, Norbornen oder Norbornadien. Insbesondere wird Propylen und Ethylen polymerisiert.

Als Molmassenregler wird, falls erforderlich, Wassertoff zugegeben. Der Gesamtdruck im Polymerisationssystem beträgt 0,5 bis 100 bar. Bevorzugt ist die Polymerisation in dem technisch besonders interessanten Druckbereich von 5 bis 64 bar.

Dabei wird das Metallocen in einer Konzentration, bezogen auf das Übergangsmetall, von $10^{-3}$ bis $10^{-8}$, vorzugweise $10^{-4}$ bis $10^{-7}$ mol Übergangsmetall pro $dm^3$ Lösemittel bzw. pro $dm^3$ Reaktorvolumen angewendet. Das Aluminoxan wird in einer Konzentration von $10^{-5}$ bis $10^{-1}$ mol, vorzugsweise $10^{-4}$ bis $10^{-2}$ mol pro $dm^3$ Lösemittel bzw. pro $dm^3$ Reaktorvolumen verwendet. Prinzipiell sind aber auch höhere Konzentrationen möglich.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Butan, Pentan, Hexan, Heptan, Isooctan, Cyclohexan, Methylcyclohexan, genannt.

Weiterhin kann eine Benzin- bzw hydrierte Dieselolfraktion benutzt werden. Brauchbar ist auch Toluol. Bevorzugt wird im flüssigen Monomeren polymerisiert.

Werden inerte Lösemittel verwendet, werden die Monomeren gasförmig oder flüssig zudosiert.

Die Dauer der Polymerisation ist beliebig, da das erfindungsgemäß zu verwendende Katalysatorsystem einen nur geringen zeitabhängigen Abfall der Polymerisationsaktivität zeigt.

Das erfindungsgemäße Verfahren zeichnet sich dadurch aus, daß die erfindungsgemäßen Metallocene im technisch interessanten Temperaturbereich zwischen 30 und 80 °C Polymere mit hoher Molmasse, hoher Stereospezifität, enger Molmassendispersität und insbesondere einem hohen Schmelzpunkt, gleichbedeutend mit hoher Kristallinität und hoher Härte, erzeugen.

Die nachfolgenden Beispiele sollen die Erfindung näher erläutern.

Es bedeuten:

VZ = Viskositätszahl in $cm^3/g$

$M_w$ = Molmassengewichtsmittel
$M_w/M_n$ = Molmassendispersität
} ermittelt durch Gelpermeationschromatographie.

II = Isotaktischer Index (II = mm+1/2 mr) ermittelt durch $^{13}C$-NMR-Spektroskopie

$n_{iso}$ = Länge der isotaktischen Blöcke (in Propyleneinheiten) ($n_{iso}$ = 1+ 2 mm/mr) ermittelt durch $^{13}C$-NMR-Spektroskopie

Schmelzpunkte und Schmelzwärmen $\Delta H_{Schm.}$ wurden mit DSC bestimmt (20 °C/min Aufheiz-/Abkühlgeschwindigkeit).

Der Schmelzindex MFI (230 °C, 5 kg Belastung) wurde nach DIN 53 735 gemessen und in g/10 min angegeben.

Synthese der in den Beispielen verwendeten Metallocene:

Die Herstellung der Chelatliganden $LiR^c-(CR^8R^9)_m-R^7-(CR^8R^9)_n-R^dLi$ durch Deprotonierung ist bekannt und erfolgt gemäß:

J. Am. Chem. Soc., 112 (1990) 2030-2031, ibid. 110 (1988) 6255-6256, ibid. 109 (1987), 6544-6545, J. Organomet. Chem., 322 (1987) 65-70, New. J. Chem. 14 (1990) 499-503, Bull. Soc. Chim., 1967, 2954.

Die als Ausgangssubstanzen dienenden Indenylverbindungen $H_2R^{c'}$ und $H_2R^{d'}$ werden in Anlehnung an oder gemäß bekannten Synthesevorschriften hergestellt:

J. Org. Chem., 49 (1984) 4226-4237, J. Chem. Soc., Perkin II, 1981, 403-408, J. Am. Chem. Soc., 106 (1984) 6702, J. Am. Chem. Soc., 65 (1943) 567, J. Med. Chem., 30 (1987) 1303-1308, Chem. Ber. 85 (1952) 78-85 und die Ausführungsbeispiele.

Synthese der Ausgangssubstanzen

I) Synthese von 2-Me-Inden

110,45 g (0,836 mol) 2-Indanon wurden in 500 ml Diethylether gelöst und 290 $cm^3$ 3 n (0,87 mol) etherische Methylgrignardlösung so zugetropft, daß leicht refluxierte Nach 2 h Kochen unter leichtem Rückfluß wurde auf eine Eis/Salzsäure-Mischung gegeben und mit Ammeniumchlorid ein pH von 2-3 eingestellt. Die organische Phase wurde abgetrennt und mit $NaHCO_3$ und Kochsalzlösung gewaschen und getrocknet. Es wurden 98 g Rohprodukt (2-Hydroxy-2-methylindan) erhalten, welches nicht weiter gereinigt wurde.

In 500 $cm^3$ Toluol wurde dieses Produkt gelöst, mit 3 g p-Toluolsulfonsäure am Wasserabscheider bis zur Beendigung der Wasserabspaltung erhitzt, eingeengt, in Dichlormethan aufgenommen und über Silicagel filtriert und im Vakuum destilliert (80°C/10 mbar).
Ausbeute: 28,49 g (0,22 mol-26 %).

Die Synthese dieser Verbindung ist auch beschrieben in: C.F. Koelsch, P.R. Johnson, J. Am. Chem. Soc., 65 (1943) 567-573

II) Synthese von $(2\text{-Me-Inden})_2SiMe_2$

13 g (100 mmol) 2-Me-Inden wurde in 400 $cm^3$ Diethylether gelöst und 62,5 $cm^3$ 1,6 n (100 mmol) n-Butyllithium-n-Hexan-Lösung innerhalb 1 h unter Eiskühlung zugetropft und dann 1 h bei ~35°C nachgerührt.

6,1 $cm^3$ (50 mmol) Diemthyldichlorsilan wurden in 50 $cm^3$ $Et_2O$ vorgelegt und bei 0°C die Lithiosalzlösung innerhalb von 5 h zugetropft, über Nacht bei Raumtemperatur gerührt und über das Wochenende stehen gelassen.

Von abgesetztem Feststoff wurde abfiltriert und zur Trockne eingedampft. Nach Extraktion mit kleinen Portionen n-Hexan wurde filtriert und eingeengt. Es fielen 5,7 g (18,00 mmol) eines weißen Kristallisats an. Die Mutterlauge wurde eingeengt und dann säulenchromatographisch (n-Hexan/$H_2CCl_2$ 9:1 vol.) gereinigt, wobei nochmals 2,5 g (7,9 mmol-52 %) Produkt (als Isomerengemisch) anfielen.
$r_F$ ($SiO_2$; n-Hexan/$H_2CCl_2$ 9:1 vol.) = 0.37

Das 1-H-NMR-Spektrum zeigt die für ein Isomerengemisch zu erwartenden Signale in Verschiebung und Integrationsverhältnis.

III) Synthese von $(2\text{-Me-Ind})_2CH_2CH_2$

3 g (23 mmol) 2-Me-Inden wurden in 50 $cm^3$ THF gelöst und 14,4 $cm^3$ 1,6 n (23,04 mmol) n-Butyllithium-n-Hexan-Lösung zugetropft und dann 1 h bei 65°C gerührt. Danach wurde 1 cm (11,5 mmol) 1,2-Dibromethan bei -78°C zugegeben, auf Raumtemperatur erwärmen lassen und 5 h gerührt. Nach Eindampfen wurde säulenchromatographisch gereinigt ($SiO_2$; n-Hexan/$H_2CCl_2$ 9:1 vol.).

Die produkthaltigen Fraktionen wurden vereinigt, eingedampft und in trockenem Ether aufgenommen, über $MgSO_4$ getrocknet, filtriert und das Lösemittel abgezogen.

Ausbeute: 1,6 g (5,59 mmol - 49 %) an Isomerengemisch $r_F$ ($SiO_2$; n-Hexan/$H_2CCl_2$ 9:1 vol.) = 0,46

Das 1-H-NMR-Spektrum entspricht der Erwartung für ein Isomerengemisch in Signalverschiebung und Integration.

A) Synthese von rac-Dimethylsilyl$(2\text{-Me-1-indenyl})_2$zirkondichlorid

1,68 9(5,31 mmol) des Chelatliganden Dimethylsilyl$(2\text{-methylinden})_2$ wurden in 50 $cm^3$ THF gegeben und 663 $cm^3$ einer 1,6 n (10,61 mmol) n-BuLi-n-Hexan-Lösung zugetropft. Die Zugabe erfolgte bei Umgebungstemperatur

innerhalb 0,5 h. Nach 2 stündigem führen bei ca. 35°C wurde das Lösemittel im Vakuum abgezogen und der Rückstand mit n-Pentan verrührt, abfiltriert und getrocknet.

Das so erhaltene Dilithiosalz wurde bei -78°C zu einer Suspension von 1,24 g (5,32 mmol) $ZrCl_4$ in 50 $cm^3$ $CH_2Cl_2$ gegeben und die Mischung 3 h bei dieser Temperatur gerührt. Nach Erwärmung auf Raumtemperatur über Nacht wurde eingedampft. Das 1-H-NMR-Spektrum zeigte neben dem Vorliegen von etwas $ZrCl_4(thf)_2$, ein rac-meso-Gemisch. Nach Verrühren mit n-Pentan und Trocknen wurde der feste, gelbe Rückstand in THF suspendiert, abfiltriert und NMR-spektroskopisch untersucht. Diese drei Arbeitsschritte wurden mehrmals wiederholt; schließlich wurden 0,35 g (0,73 mmol-14 %) Produkt erhalten, in dem die rac-Form, nach 1-H-NMR, auf mehr als 17:1 angereichert war.

Die Verbindung zeigte eine korrekte Elementaranalyse und die folgenden NMR-Signale ($CDCl_3$, 100 MHz) : δ = 1,25 (s, 6H, Si-Me); 2,18 (s, 6H, 2-Me), 6,8 (s, 2H, 3-H-Ind); 6,92-7,75 (m, 8H, 4-7-H-Ind).

B) Synthese von rac-Ethylen (2-Me-indenyl)$_2$zirkondichlorid

Zu 5,07 g (17,7 mmol) Ligand Ethylen(2-methylinden)$_2$ in 200 $cm^3$ THF wurde bei Raumtemperatur 14,2 $cm^3$ 2,5 n (35,4 mmol) n-BuLi-n-Hexan-Lösung innerhalb 1 h zugetropft und dann 3 h bei ca. 50 °C gerührt. Dabei geht ein zwischenzeitlich gebildeter Niederschlag wieder in Lösung. Über Nacht wurde stehengelassen.

6,68 g (17,7 mmol) $ZrCl_4(thf)_2$ in 250 $cm^3$ THF wurden simultan mit obiger Dilithiosalzlösung zu ca. 50 $cm^3$ THF bei 50 °C zugetropft und dann 20 h bei dieser Temperatur gerührt. Der Toluolextrakt des Eindampfrückstands wurde eingedampft. Nach Extraktion des Rückstands mit wenig THF wurde aus Toluol umkristallisiert. Dabei wurden 0,44 g (0,99 mmol-5,6 %) Produkt erhalten, wobei die rac-Form besser als 15:1 angereichert war.

Die Verbindung zeigte eine korrekte Elementaranalyse und die folgenden NMR-Signale ($CDCl_3$, 100 MHz) : δ = 2,08 (2s, 6H, 2-Me); 3,45-4,18 (m, 4H, $-CH_2CH_2-$), 6,65 (2H, 3-H-Ind); 7,05-7,85 (m, 8H, 4-7-H-Ind).

Beispiel 1

Ein trockener 24 dm3-Reaktor wurde mit Stickstoff gespült und mit 12 $dm^3$ flüssigem Propylen befüllt.

Dann wurden 35 $cm^3$ toluolische Methylaluminoxanlösung (entsprechend 52 mmol Al, mittlerer Oligomerisierungsgrad n = 17) zugegeben und der Ansatz bei 30 °C 15 Minuten gerührt. Parallel dazu wurden (0,011 mmol) rac-Dimethylsilyl(2-Me-1-indenyl)$_2$zirkondichlorid in 13,5 $cm^3$ toluolischer Methylaluminoxanlösung (20 mmol Al) gelöst und durch 15 minütiges Stehenlassen voraktiviert. Die Lösung wurde dann in den Reaktor gegeben und das Polymerisationssystem durch Aufheizung (innerhalb von 5 Minuten) auf 70 °C gebracht, und durch Kühlung 3 h bei dieser Temperatur gehalten.
Resultat, siehe Tabelle 1.

Beispiel 2

Beispiel 1 wurde wiederholt, es wurden jedoch (0,04 mmol) des Metallocens eingesetzt, die Polymerisationstemperatur betrug 50 °C.
Resultat, siehe Tabelle 1.

Beispiel 3

Beispiel 1 wurde wiederholt, es wurden jedoch (0,12 mmol) des Metallocens verwendet, die Polymerisationstemperatur betrug 30 °C.
Resultat, siehe Tabelle 1.

Vergleichsbeispiele A,B,C

Die Beispiele 1 bis 3 wurden wiederholt, verwendet wurde jedoch das Metallocen Dimethylsilyl(1-indenyl)$_2$zirkondichlorid Ergebnis, siehe Tabelle 1.

TABELLE 1

| Beisp. | Polym.temp. [°C] | $n_{iso}$ | Schmp. [°C] | $\Delta H_{Schm.}$ [J/g] |
|---|---|---|---|---|
| 1 | 70 | 38 | 145 | 86,6 |
| 2 | 50 | 48 | 148 | 88,1 |
| 3 | 30 | 48 | 152 | 90,2 |

TABELLE 1 (fortgesetzt)

| Beisp. | Polym.temp. [°C] | $n_{iso}$ | Schmp. [°C] | $\Delta H_{Schm.}$ [J/g] |
|---|---|---|---|---|
| A | 70 | 32 | 140 | - |
| B | 50 | 34 | 142 | - |
| C | 30 | 37 | 145 | - |

Die Beispiele 1,2,3 verglichen mit A/B/C zeigen den positiven Effekt der Substitution in 2-Position des Indenylliganden.

Beispiel 4

Beispiel 1 wurde wiederholt, es wurden jedoch (0,015 mmol) Ethylen(2-Me-1-indenyl)$_2$-zirkondichlorid eingesetzt. Resultat, siehe Tabelle 2.

Beispiel 5

Beispiel 4 wurde wiederholt, es wurden jedoch (0,062 mmol) des Metallocens verwendet, die. Polymerisationstemperatur betrug 50 °C.
Resultat, siehe Tabelle 2.

Beispiel 6

Beispiel 4 wurde wiederholt, es wurden jedoch (0,110 mmol) des Metallocens verwendet, die Polymerisationstemperatur betrug 30 °C.
Resultat, siehe Tabelle 2.

Vergleichsbeispiele M,N,O

Die Beispiele 4 bis 6 wurden wiederholt, verwendet wurde jedoch das Metallocen Ethylen(1-indenyl)$_2$ zirkondichlorid, siehe auch Tabelle 2.

TABELLE 2

| (Vergl.-) beisp. | Polym temp. [°C] | $n_{iso}$ | Schmp. [°C] | $\Delta H_{Schm}$. [J/g] |
|---|---|---|---|---|
| M | 70 | 23 | 132 | 64,9 |
| N | 50 | 30 | 138 | 78,1 |
| O | 30 | 29 | 137 | 78,6 |
| 4 | 70 | 25 | 134 | 77,0 |
| 5 | 50 | 30 | 138 | 78,9 |
| 6 | 30 | 32 | 138 | 78,6 |

Der Vergleich der Vergleichsbeispiele M,N,O mit den Beispielen 4 bis 6 belegt den Einfluß der Substitution in 2-Position. $n_{iso}$, Schmelzpunkt und Schmelzwärme sind bei den Beispielen 4 - 6 weist höher - somit ist auch die Kristallinität und die Härte der Polymeren deutlich verbessert.
Abkürzungen:
Me = Methyl, Et = Ethyl, Bu = Butyl, Ph = Phenyl,
THF = Tetrahydrofuran, PE = Polyethylen, PP = Polypropylen

**Patentansprüche**

1. Verfahren zur Herstellung eines Olefinpolymers durch Polymerisation oder Copolymerisation eines Olefins der Formel $R^a$-CH=CH-$R^b$, worin $R^a$ und $R^b$ gleich oder verschieden sind und ein Wasserstoffatom oder einen Kohlenwasserstoffrest mit 1 bis 14 C-Atomen bedeuten, oder $R^a$ und $R^b$ mit den sie verbindenden Atomen einen Ring bilden können, bei einer Temperatur von -60 bis 200 °C, bei einem Druck von 0,5 bis 100 bar, in Lösung, in Suspension oder in der Gasphase, in Gegenwart eines Katalysators, welcher aus einem Metallocen als Übergangsmetallverbindung und einem Cokatalysator besteht, wobei der Cokatalysator ein Aluminoxan und/oder eine salzartige Verbindung der Formel $R_xNH_{4-x}BR'_4$ oder der Formel $R_3$ $PHBR'_4$ ist, worin x = 1,2 oder 3 ist, R = Alkyl oder Aryl gleich oder verschieden sind und R' = Aryl sind, das auch fluoriert oder teilfluoriert sein kann, wobei das Metallocen eine Verbindung der Formel Ia ist,

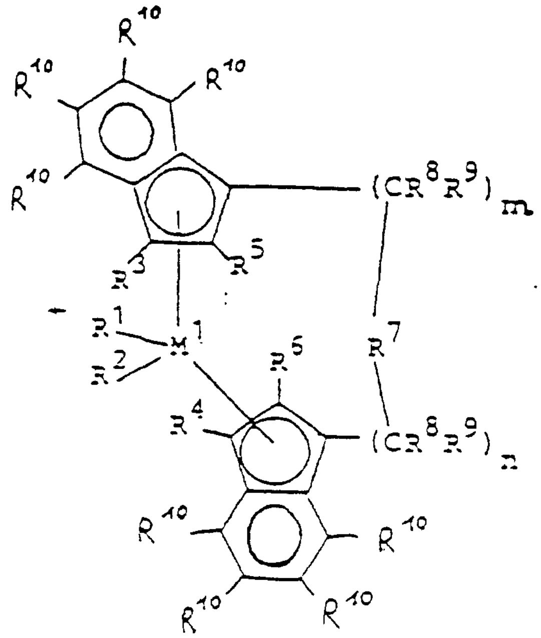

(Ia)

worin

| | |
|---|---|
| $M^1$ | ein Metall der Gruppe IVb, Vb oder VIb des Periodensystems ist, |
| $R^1$ und $R^2$ | gleich oder verschieden sind und ein Wasserstoffatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe oder ein Halogenatom bedeuten, |
| $R^3$ und $R^4$ | gleich oder verschieden sind und ein Wasserstoffatom, ein Halogenatom, eine $C_1$-$C_{10}$-Alkylgruppe, die halogeniert sein kann, eine $C_6$-$C_{10}$-Arylgruppe, einen $-NR_2^{15}$, $-SR^{15}$, $-OSiR_3^{15}$, $-SiR_3^{15}$ oder $-PR_2^{15}$-Rest bedeuten, worin $R^{15}$ ein Halogenatom, eine $C_1$-$C_{10}$-Alkylgruppe oder eine $C_6$-$C_{10}$-Arylgruppe ist, |
| $R^5$ und $R^6$ | gleich oder verschieden sind und die für $R^3$ und $R^4$ genannte Bedeutung haben, mit der Maßgabe, daß $R^5$ und $R^6$ nicht Wasserstoff sind, |
| $R^7$ | |

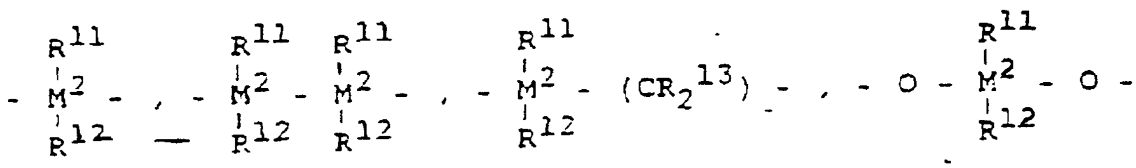

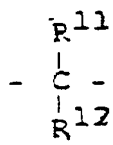 , 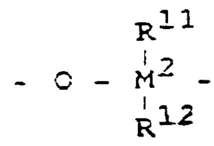 ,

$=BR^{11}$, $=AlR^{11}$, -Ge-, -Sn-, -O-, -S-, =SO, $=SO_2$, $=NR^{11}$, =CO, $=PR^{11}$ oder $=P(O)R^{11}$ ist,

wobei

| | |
|---|---|
| $R^{11}$, $R^{12}$ und $R^{13}$ | gleich oder verschieden sind und ein Wasserstoffatom, ein Halogenatom, eine $C_1$-$C_{10}$-Alkylgruppe, $C_1$-$C_{10}$-Fluoralkylgruppe, eine $C_6$-$C_{10}$-Arylgruppe, eine $C_6$-$C_{10}$-Fluorarylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe bedeuten oder $R^{11}$ und $R^{12}$ oder $R^{11}$ und $R^{13}$ jeweils mit den sie verbindenden Atomen einen Ring bilden, |
| $M^2$ | Silizium, Cermanium oder Zinn ist, |
| $R^8$ und $R^9$ | gleich oder verschieden sind und die für $R^{11}$ genannte Bedeutung haben, |

m und n gleich oder verschieden sind und null, 1 oder 2 sind, wobei m plus n null, 1 oder 2 ist, und
die Reste $R^{10}$ gleich oder verschieden sind und die für $R^{11}$, $R^{12}$ und $R^{13}$ genannte Bedeutung haben und wobei Ethylen-bis(2,3-dimethyl-1-indenyl) zirconiumdichlorid als Metallocen ausgenommen ist.

**2.** Verfahren gemäß Anspruch 1, worin in der Verbindung der Formel Ia die Reste $R^{10}$ gleich oder verschieden sind und ein Wasserstoffatom, ein Halogenatom, eine $C_1$-$C_{10}$-Alkylgruppe, $C_1$-$C_{10}$-Fluoralkylgruppe, eine $C_6$-$C_{10}$-Arylgruppe, eine $C_6$-$C_{10}$-Fluorarylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe bedeuten oder
zwei Reste $R^{10}$ jeweils mit den sie verbindenden Atomen einen Ring bilden.

**3.** Verfahren gemäß Anspruch 1 oder 2, worin in der Verbindung der Formel Ia die Reste $R^{10}$ Wasserstoffatome oder eine $C_1$-$C_{10}$-Alkylgruppe bedeuten.

**4.** Verfahren gemäß einem oder mehreren der Ansprüche 1 bis. 3, worin der Cokatalysator ein Aluminoxan der Formel (II)

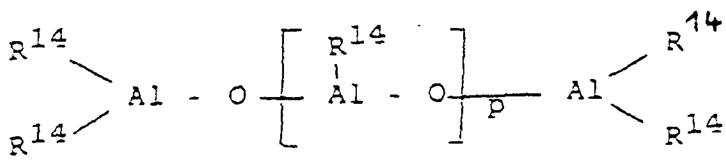 (II)

für den linearen Typ und/oder der Formel III

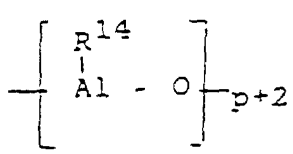 (III)

für den cyclischen Typ ist,
wobei in den Formeln (II) und (III) die Reste $R^{14}$ gleich oder verschieden sein können und eine $C_1$-$C_6$-Alkylgruppe, eine $C_6$-$C_{18}$-Arylgruppe oder Wasserstoff bedeuten und p eine ganze Zahl von 2 bis 50 bedeutet.

**5.** Verfahren gemäß einem oder mehreren der Ansprüche 1 bis 4, worin das Metallocen auf einen Träger aufgebracht ist.

**6.** Verfahren gemäß einem oder mehreren der Ansprüche 1 bis 5, worin das Metallocen vorpolymerisiert ist.

**7.** Katalysator, welcher aus einem Metallocen als Übergangsmetallverbindung und einem Cokatalysator besteht, wobei der Cokatalysator ein Aluminoxan und/oder eine salzartige Verbindung der Formel $R_xNH_{4-x}BR'_4$ oder der Formel $R_3PHBR'_4$ ist, worin x = 1,2 oder 3 ist, R = Alkyl oder Aryl gleich oder verschieden sind und R' = Aryl sind, das auch fluroriert oder teilfluoriert sein kann, wobei das Metallocen eine Verbindung der Formef Ia ist,

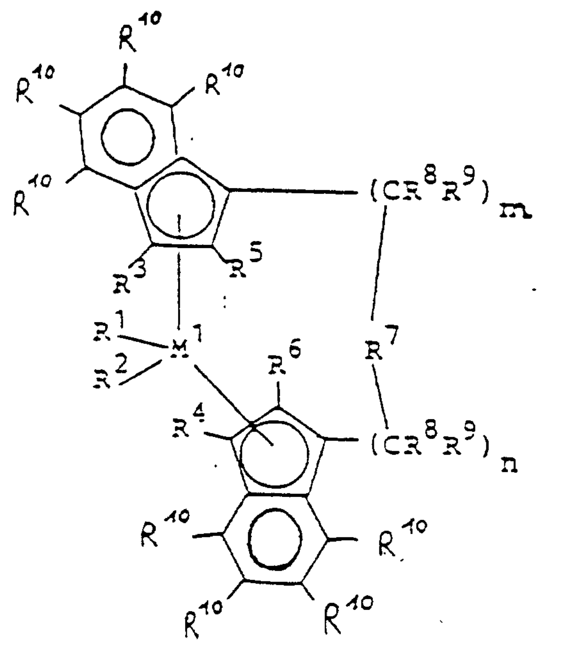

(Ia)

worin

| | |
|---|---|
| $M^1$ | ein Metall der Gruppe IVb, Vb oder VIb des Periodensystems ist, |
| $R^1$ und $R^2$ | gleich oder verschieden sind und ein Wasserstoffatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe oder ein Halogenatom bedeuten, |
| $R^3$ und $R^4$ | gleich oder verschieden sind und ein Wasserstoffatom, ein Halogenatom, eine $C_1$-$C_{10}$-Alkylgruppe, die halogeniert sein kann, eine $C_6$-$C_{10}$-Arylgruppe, einen $-NR_2^{15}$, $-SR^{15}$, $-OSiR_3^{15}$, $-SiR_3^{15}$ oder $-PR_2^{15}$-Rest bedeuten, worin $R^{15}$ ein Halogenatom, eine $C_1$-$C_{10}$-Alkylgruppe oder eine $C_6$-$C_{10}$-Arylgruppe ist, |
| $R^5$ und $R^6$ | gleich oder verschieden sind und die für $R^3$ und $R^4$ genannte Bedeutung haben, mit der Maßgabe, daß $R^5$ und $R^6$ nicht Wasserstoff sind, |

$R^7$

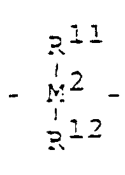 , 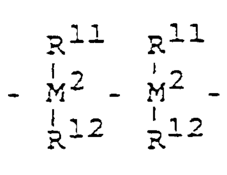 , 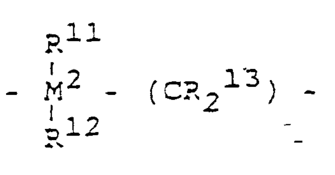 , 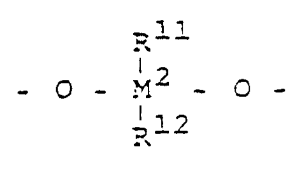

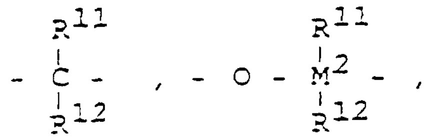

$=BR^{11}$, $=AlR^{11}$, -Ge-, -Sn-, -O-, -S-, =SO, $=SO_2$, $=NR^{11}$, =CO, $=PR^{11}$ oder $=P(O)R^{11}$ ist,

wobei

| | |
|---|---|
| $R^{11}$, $R^{12}$ und $R^{13}$ | gleich oder verschieden sind und ein Wasserstoffatom, ein Halogenatom, eine $C_1$-$C_{10}$-Alkylgruppe, $C_1$-$C_{10}$-Fluoralkylgruppe, eine $C_6$-$C_{10}$-Arylgruppe, eine $C_6$-$C_{10}$-Fluorarylgruppe, eine $C_1$-$C_{10}$-Alkoxygruppe eine $C_2$-$C_{10}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe bedeuten oder $R^{11}$ und $R^{12}$ oder $R^{11}$ und $R^{13}$ jeweils mit den sie verbindenden Atomen einen Ring bilden, |
| $M^2$ | Silizium, Germanium oder Zinn ist, |
| $R^8$ und $R^9$ | gleich oder verschieden sind und die für $R^{11}$ genannte Bedeutung haben, |

m und n gleich oder verschieden sind und null, 1 oder 2 sind, wobei m plus n null, 1 oder 2 ist, und die Reste $R^{10}$ gleich oder verschieden sind und die für $R^{11}$, $R^{12}$ und $R^{13}$ genannte Bedeutung haben und wobei Ethylen-bis(2,3-dimethyl-1-indenyl)zirconiumdichlorid als Metallocen ausgenommen ist.

**8.** Katalysator gemäß Anspruch 7, worin in der Verbindung der Formel Ia die Reste $R^{10}$ gleich oder verschieden sind und ein Wasserstoffatom, ein Halogenatom, eine $C_1$-$C_{10}$-Alkylgruppe, $C_1$-$C_{10}$-Fluoralkylgruppe, eine $C_6$-$C_{10}$-Arylgruppe, eine $C_6$-$C_{10}$-Fluorarylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe bedeuten oder zwei Reste $R^{10}$ jeweils mit den sie verbindenden Atomen einen Ring bilden.

**9.** Katalysator gemäß Anspruch 7 oder 8, worin in der Verbindung der Formel Ia die Reste $R^{10}$ Wasserstoffatome oder eine $C_1$-$C_{10}$-Alkylgruppe bedeuten.

**10.** Katalysator gemäß einem oder mehreren der Ansprüche 7 bis 9, worin der Cokatalysator ein Aluminoxan der Formel (II)

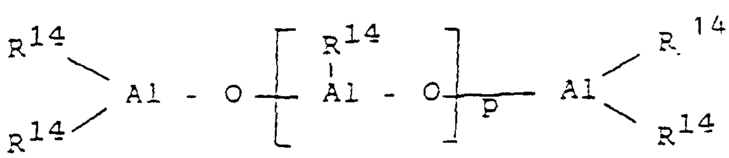

(II)

für den linearen Typ und/oder der Formel III

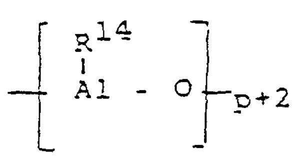

(III)

für den cyclischen Typ ist,
wobei in den Formeln (II) und (III) die Reste $R^{14}$ gleich oder verschieden sein können und eine $C_1$-$C_6$-Alkylgruppe, eine $C_6$-$C_{18}$-Arylgruppe oder Wasserstoff bedeuten und p eine ganze Zahl von 2 bis 50 bedeutet.

**11.** Katalysator gemäß einem oder mehreren der Ansprüche 7 bis 10, worin das Metallocen auf einen Träger aufgebracht ist.

**12.** Katalysator gemäß einem oder mehreren der Ansprüche 7 bis 11, worin das Metallocen vorpolymerisiert ist.

**13.** Verwendung eines Katalysators gemäß einem oder mehreren der Ansprüche 7 bis 12 zur Polymerisation oder Copolymerisation eines Olefins der Formel $R^a$-CH=CH-$R^b$, worin $R^a$ und $R^b$ gleich oder verschieden sind und ein Wasserstoffatom oder einen Kohlenwasserstoffrest mit 1 bis 14 C-Atomen bedeuten, oder $R^a$ und $R^b$ mit den sie verbindenden Atomen einen Ring bilden können.

**14.** Olefinpolymer erhältlich durch Polymerisation oder Copolymerisation eines Olefins der Formel $R^a$-CH=CH-$R^b$, worin $R^a$ und $R^b$ gleich oder verschieden sind und ein Wasserstoffatom oder einen Kohlenwasserstoffrest mit 1 bis 14 C-Atomen bedeuten, oder $R^a$ und $R^b$ mit den sie verbindenden Atomen einen Ring bilden können, dadurch gekennzeichnet, daß die Polymerisation bei einer Temperatur von 30 bis 80°C in Gegenwart eines Katalysators gemäß Anspruch 7 durchgeführt wird.

**Claims**

**1.** A process for the preparation of an olefin polymer by polymerization or copolymerization of an olefin of the formula $R^a$-CH=CH-$R^b$, in which $R^a$ and $R^b$ are identical or different and are a hydrogen atom or a hydrocarbon radical having 1 to 14 carbon atoms, or $R^a$ and $R^b$, together with the atoms binding them, may form a ring, at a temperature of -60 to 200°C, at a pressure of 0.5 to 100 bar, in solution, in suspension or in the gas phase, in the presence of a catalyst which is composed of a metallocene as a transition metal compound and a cocatalyst, where the cocatalyst is an aluminoxane and/or a salt-like compound of the formula $R_xNH_{4-x}BR'_4$ or of the formula $R_3PHBR'_4$, in which x is 1, 2 or 3, the radicals R are identical or different and are alkyl or aryl and R' is aryl which may also be perfluorinated or fluorinated, where the metallocene is a compound of the formula Ia

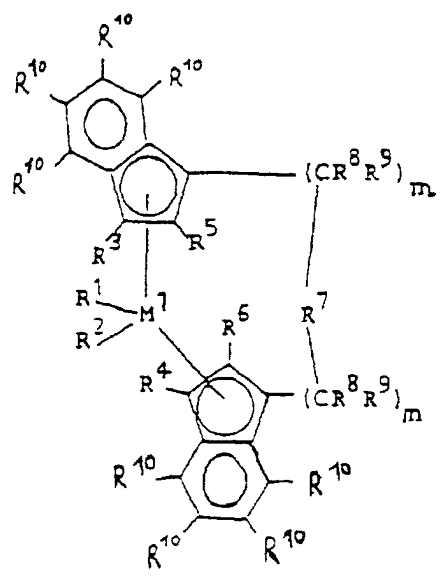

(Ia)

wherein

| | |
|---|---|
| $M^1$ | is a metal of group IVb, Vb or VIb of the Periodic Table, |
| $R^1$ and $R^2$ | are identical or different and are a hydrogen atom, a $C_1$-$C_{10}$-alkyl group, a $C_1$-$C_{10}$-alkoxy group, a $C_6$-$C_{10}$-aryl group, a $C_6$-$C_{10}$-aryloxy group, a $C_2$-$C_{10}$-alkenyl group, a $C_7$-$C_{40}$-arylalkyl group, a $C_7$-$C_{40}$-alkylaryl group, a $C_8$-$C_{40}$-arylalkenyl group or a halogen atom, |
| $R^3$ and $R^4$ | are identical or different and are a hydrogen atom, a halogen atom, a $C_1$-$C_{10}$-alkyl group which may be halogenated, a $C_6$-$C_{10}$-aryl group, a $-NR_2^{15}$, $-SR^{15}$, $-OSiR_3^{15}$, $-SiR_3^{15}$ or $-PR_2^{15}$ radical, in which $R^{15}$ is a halogen atom, a $C_1$-$C_{10}$-alkyl group or a $C_6$-$C_{10}$-aryl group, |

$R^5$ and $R^6$ are identical or different and have the meaning stated for $R^3$ and $R^4$, with the proviso that $R^5$ and $R^6$ are not hydrogen,

$R^7$ is

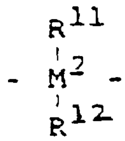 , 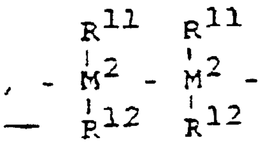 , 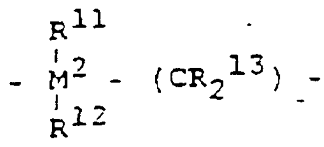 , 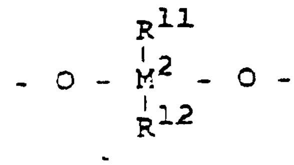

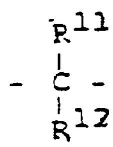 , 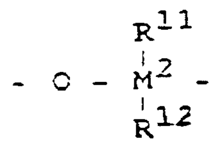 ,

$=BR^{11}$, $=AlR^{11}$, -Ge-, -Sn-, -O-, -S-, =SO, $=SO_2$, $=NR^{11}$, =CO, $=PR^{11}$ or $=P(O)R^{11}$,

where

$R^{11}$, $R^{12}$ and $R^{13}$ are identical or different and are a hydrogen atom, a halogen atom, a $C_1$-$C_{10}$-alkyl group, a $C_1$-$C_{10}$-fluoroalkyl group, a $C_6$-$C_{10}$-aryl group, a $C_6$-$C_{10}$-fluoroaryl group, a $C_1$-$C_{10}$-alkoxy group, a $C_2$-$C_{10}$-alkenyl group, a $C_7$-$C_{40}$-arylalkyl group, a $C_8$-$C_{40}$-arylalkenyl group or a $C_7$-$C_{40}$-alkylaryl group, or $R^{11}$ and $R^{12}$ or $R^{11}$ and $R^{13}$, together with the atoms binding them, each form a ring,

$M^2$ is silicon, germanium or tin,

$R^8$ and $R^9$ are identical or different and have the meanings stated for $R^{11}$,

m and n are identical or different and are zero, 1 or 2, m plus n being zero, 1 or 2, and

the radicals $R^{10}$ are identical or different and have the meaning stated for $R^{11}$, $R^{12}$ and $R^{13}$, and where the metallocene is not ethylene-bis(2,3-dimethyl-1-indenyl) zirconium dichloride.

2. A process as claimed in claim 1, wherein in the compound of the formula Ia the radicals $R^{10}$ are identical or different and are a hydrogen atom, a halogen atom, a $C_1$-$C_{10}$-alkyl group, a $C_1$-$C_{10}$-fluoroalkyl group, a $C_6$-$C_{10}$-aryl group, a $C_6$-$C_{10}$-fluoroaryl group, a $C_1$-$C_{10}$-alkoxy group, a $C_2$-$C_{10}$-alkenyl group, a $C_7$-$C_{40}$-arylalkyl group, a $C_8$-$C_{40}$-arylalkenyl group or a $C_7$-$C_{40}$-alkylaryl group, or two radicals $R^{10}$, together with the atoms binding them, each form a ring.

3. A process as claimed in claim 1 or 2, wherein in the compound of the formula Ia the radicals $R^{10}$ are hydrogen atoms or a $C_1$-$C_{10}$-alkyl group.

4. A process as claimed in one or more of claims 1 to 3, wherein the cocatalyst is an aluminoxane of the formula (II)

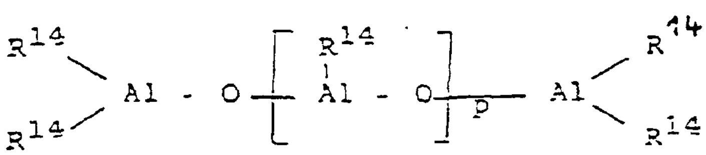

(II)

for the linear type and/or of the formula III

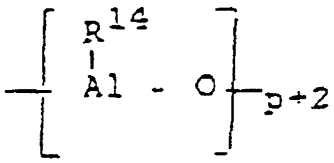

(III)

for the cyclic type,
where, in the formulae (II) and (III), the radicals $R^{14}$ may be identical or different and are a $C_1$-$C_6$-alkyl group, a $C_6$-$C_{18}$-aryl group or hydrogen and p is an integer of from 2 to 50.

**5.** A process as claimed in one or more of claims 1 to 4, wherein the metallocene has been applied to a carrier.

**6.** A process as claimed in one or more of claims 1 to 5, wherein the metallocene has been prepolymerized.

**7.** A catalyst which is composed of a metallocene as a transition metal compound and a cocatalyst, where the cocatalyst is an aluminoxane and/or a salt-like compound of the formula $R_xNH_{4-x}BR'_4$ or of the formula $R_3PHBR'_4$, in which x is 1, 2 or 3, the radicals R are identical or different and are alkyl or aryl and R' is aryl which may also be perfluorinated or fluorinated, where the metallocene is a compound of the formula Ia

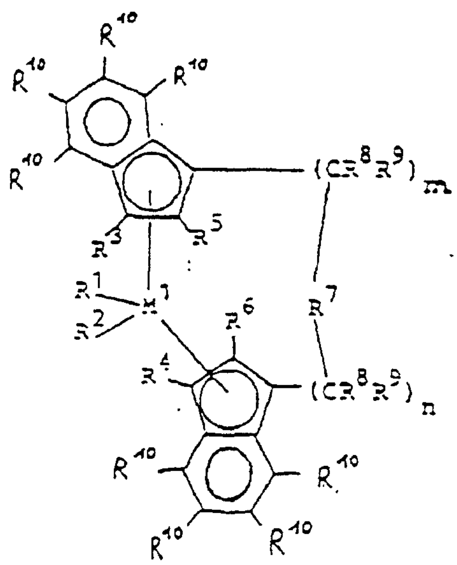

(Ia)

wherein

$M^1$ is a metal of group IVb, Vb or VIb of the Periodic Table,

$R^1$ and $R^2$ are identical or different and are a hydrogen atom, a $C_1$-$C_{10}$-alkyl group, a $C_1$-$C_{10}$-alkoxy group, a $C_6$-$C_{10}$-aryl group, a $C_6$-$C_{10}$-aryloxy group, a $C_2$-$C_{10}$-alkenyl group, a $C_7$-$C_{40}$-arylalkyl group, a $C_7$-$C_{40}$-alkylaryl group, a $C_8$-$C_{40}$-arylalkenyl group or a halogen atom,

$R^3$ and $R^4$ are identical or different and are a hydrogen atom, a halogen atom, a $C_1$-$C_{10}$-alkyl group which may be halogenated, a $C_6$-$C_{10}$-aryl group, a $-NR_2^{15}$, $-SR^{15}$, $-OSiR_3^{15}$, $-SiR_3^{15}$ or $-PR_2^{15}$ radical, in which $R^{15}$ is a halogen atom, a $C_1$-$C_{10}$-alkyl group or a $C_6$-$C_{10}$-aryl group,

$R^5$ and $R^6$ are identical or different and have the meaning stated for $R^3$ and $R^4$, with the proviso that $R^5$ and $R^6$ are not hydrogen,

$R^7$ is

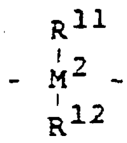 , 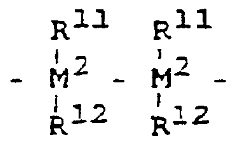 , 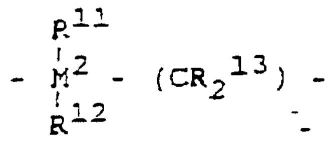 , 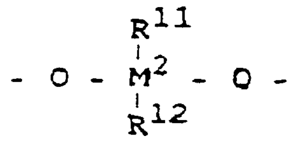

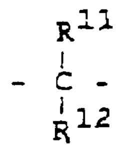 , 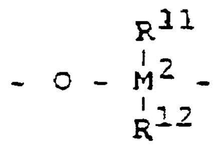 ,

$=BR^{11}$, $=AlR^{11}$, -Ge-, -Sn-, -O-, -S-, =SO, $=SO_2$, $=NR^{11}$, =CO, $=PR^{11}$ or $=P(O)R^{11}$,

where

$R^{11}$, $R^{12}$ and $R^{13}$ are identical or different and are a hydrogen atom, a halogen atom, a $C_1$-$C_{10}$-alkyl group, a $C_1$-$C_{10}$-fluoroalkyl group, a $C_6$-$C_{10}$-aryl group, a $C_6$-$C_{10}$-fluoroaryl group, a $C_1$-$C_{10}$-alkoxy group, a $C_2$-$C_{10}$-alkenyl group, a $C_7$-$C_{40}$-arylalkyl group, a $C_8$-$C_{40}$-arylalkenyl group or a $C_7$-$C_{40}$-alkylaryl group, or $R^{11}$ and $R^{12}$ or $R^{11}$ and $R^{13}$, together with the atoms binding them, each form a ring,

$M^2$ is silicon, germanium or tin,
$R^8$ and $R^9$ are identical or different and have the meanings stated for $R^{11}$,
m and n are identical or different and are zero, 1 or 2, m plus n being zero, 1 or 2, and

the radicals $R^{10}$ are identical or different and have the meaning stated for $R^{11}$, $R^{12}$ and $R^{13}$, and where the metallocene is not ethylene-bis(2,3-dimethyl-1-indenyl)zirconium dichloride.

8. A catalyst as claimed in claim 7, wherein in the compound of the formula Ia the radicals $R^{10}$ are identical or different and are a hydrogen atom, a halogen atom, a $C_1$-$C_{10}$-alkyl group, a $C_1$-$C_{10}$-fluoroalkyl group, a $C_6$-$C_{10}$-aryl group, a $C_6$-$C_{10}$-fluoroaryl group, a $C_1$-$C_{10}$-alkoxy group, a $C_2$-$C_{10}$-alkenyl group, a $C_7$-$C_{40}$-arylalkyl group, a $C_8$-$C_{40}$-arylalkenyl group or a $C_7$-$C_{40}$-alkylaryl group, or two radicals $R^{10}$, together with the atoms binding them, each form a ring.

9. A catalyst as claimed in claim 7 or 8, wherein in the compound of the formula Ia the radicals $R^{10}$ are hydrogen atoms or a $C_1$-$C_{10}$-alkyl group.

10. A catalyst as claimed in one or more of claims 7 to 9, wherein the cocatalyst is an aluminoxane of the formula (II)

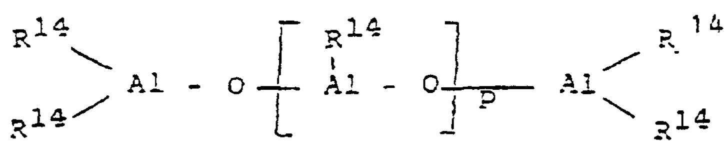 (II)

for the linear type and/or of the formula III

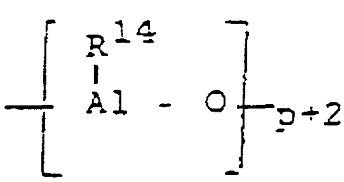 (III)

for the cyclic type,
where, in the formulae (II) and (III), the radicals $R^{14}$ may be identical or different and are a $C_1$-$C_6$-alkyl group, a $C_6$-$C_{18}$-aryl group or hydrogen and p is an integer of from 2 to 50.

**11.** A catalyst as claimed in one or more of claims 7 to 10, wherein the metallocene has been applied to a carrier.

**12.** A catalyst as claimed in one or more of claims 7 to 11, wherein the metallocene has been prepolymerized.

**13.** The use of a catalyst as claimed in one or more of claims 7 to 12 for the polymerization or copolymerization of an olefin of the formula $R^a$-CH=CH-$R^b$, in which $R^a$ and $R^b$ are identical or different and are a hydrogen atom or a hydrocarbon radical having 1 to 14 carbon atoms, or $R^a$ and $R^b$, together with the atoms binding them, may form a ring.

**14.** An olefin polymer obtainable by polymerization or copolymerization of an olefin of the formula $R^a$-CH=CH-$R^b$, in which $R^a$ and $R^b$ are identical or different and are a hydrogen atom or a hydrocarbon radical having 1 to 14 carbon atoms, or $R^a$ and $R^b$, together with the atoms binding them, may form a ring, characterized in that the polymerization is carried out at a temperature of 30 to 80°C in the presence of a catalyst as claimed in claim 7.

## Revendications

**1.** Procédé de préparation d'un polymère d'oléfine par polymérisation ou copolymérisation d'une oléfine de la formule $R^a$-CH=CH-$R^b$, dans laquelle $R^a$ et $R^b$ sont identiques ou différents et représentent un atome d'hydrogène ou un reste hydrocarboné comportant de 1 à 14 atomes de carbone, ou bien $R^a$ et $R^b$ forment ensemble un noyau avec les atomes qui les relient, à une température de -60 à 200°C, sous une pression de 0 ,5 à 100 bar, en solution, en suspension ou dans la phase gazeuse, en présence d'un catalyseur constitué d'un métallocène en tant que composé de métal de transition et d'un cocatalyseur, le cocatalyseur étant un aluminoxane et/ou un composé salin de la formule $R_xNH_{4-x}BR'_4$ ou de la formule $R_3PHBR'_4$, où x = 1, 2 ou 3, R = radicaux alkyle ou aryle identiques ou différents, et R' = radical aryle, qui peut également être fluoré ou partiellement fluoré, le métallocène étant un composé de la formule la

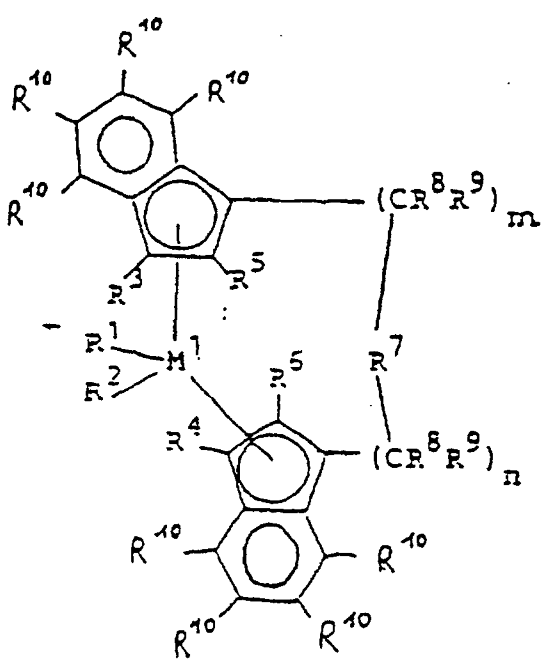

(Ia)

dans laquelle

| | |
|---|---|
| $M^1$ | représente un métal des groupes IVb, Vb ou VIb du système périodique, |
| $R^1$ et $R^2$ | sont identiques ou différents et représentent un atome d'hydrogène, un radical alkyle en $C_1$ à $C_{10}$, un radical alcoxy en $C_1$ à $C_{10}$, un radical aryle en $C_6$ à $C_{10}$, un radical aryloxy en $C_6$ à $C_{10}$, un radical alcényle en $C_2$ à $C_{10}$, un radical arylalkyle en $C_7$ à $C_{40}$, un radical alkylaryle en $C_7$ à $C_{40}$, un radical arylalcényle en $C_8$ à $C_{40}$, ou un atome d'halogène, |
| $R^3$ et $R^4$ | sont identiques ou différents et représentent un atome d'hydrogène, un atome d'halogène, un radical alkyle en $C_1$ à $C_{10}$, qui peut être halogéné, un radical aryle en $C_6$ à $C_{10}$, un reste $-NR_2^{15}$, $-SR^{15}$, $-OSiR_3^{15}$, $-SiR_3^{15}$ ou $-PR_2^{15}$, où $R^{15}$ représente un atome d'halogène, un radical alkyle en $C_1$ à $C_{10}$ ou un radical aryle en $C_6$ à $C_{10}$, |
| $R^5$ et $R^6$ | sont identiques ou différents et ont les significations indiquées pour $R^3$ et $R^4$, avec la condition que $R^5$ et $R^6$ ne soient pas de l'hydrogène, et |
| $R^7$ | représente |

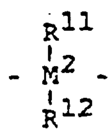 , 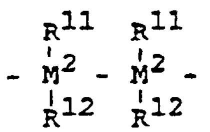 , 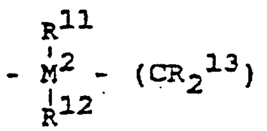 , 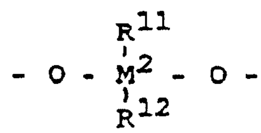

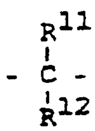 , 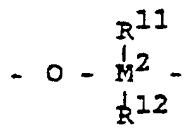

| | |
|---|---|
| | $=BR^{11}$, $=AlR^{11}$, -Ge-, -Sn-, -O-, -S-, =SO, $=SO_2$, $=NR^{11}$, =CO, $=PR^{11}$ ou $=P(O)R^{11}$, |
| $R^{11}$, $R^{12}$ ET $R^{13}$ | sont identiques ou différents et représentent un atome d'hydrogène, un atome d'halogène, un radical alkyle en $C_1$ à $C_{10}$, un radical fluoroalkyle en $C_1$ à $C_{10}$, un radical aryle en $C_6$ à $C_{10}$, un radical fluoroaryle en $C_6$ à $C_{10}$, un radical alcoxy en $C_1$ à $C_{10}$, un radical alcényle en $C_2$ à $C_{10}$, un radical arylalkyle en $C_7$ à $C_{40}$, un radical arylalcényle en $C_8$ à $C_{40}$, un radical alkylaryle en $C_7$ à $C_{40}$, ou bien $R^{11}$ et $R^{12}$ ou $R^{11}$ et $R^{13}$ forment à chaque fois un noyau avec les atomes qui les relient, |
| $M^2$ | représente le silicium, le germanium ou l'étain, |
| $R^8$ et $R^9$ | sont identiques ou différents et ont la signification indiquée pour $R^{11}$, |
| m et n | sont identiques ou différents et ont une valeur de zéro, 1 ou 2, avec m + n = zéro, 1 ou 2, et |

les restes $R^{10}$ sont identiques ou différents et ont les significations indiquées pour $R^{11}$, $R^{12}$ et $R^{13}$, le métallocène n'étant pas du dichlorure d'éthylène-bis(2,3-diméthyl-1-indényl)zirconium.

**2.** Procédé selon la revendication 1 où, dans le composé de la formule Ia, les restes $R^{10}$ sont identiques ou différents et représentent un atome d'hydrogène, un atome d'halogène, un radical alkyle en $C_1$ à $C_{10}$, un radical fluoroalkyle en $C_1$ à $C_{10}$, un radical aryle en $C_6$ à $C_{10}$, un radical fluoroaryle en $C_6$ à $C_{10}$, un radical alcoxy en $C_1$ à $C_{10}$, un radical alcényle en $C_2$ à $C_{10}$, un radical arylalkyle en $C_7$ à $C_{40}$, un radical arylalcényle en $C_8$ à $C_{40}$, un radical alkylaryle en $C_7$ à $C_{40}$, ou bien deux restes $R^{10}$ forment à chaque fois un noyau avec les atomes qui les relient.

**3.** Procédé selon l'une des revendications 1 ou 2 où, dans le composé de la formule Ia, les restes $R^{10}$ représentent des atomes d'hydrogène ou un radical alkyle en $C_1$ à $C_{10}$.

**4.** Procédé selon l'une des revendications 1 à 3, où le cocatalyseur est un aluminoxane de la formule (II)

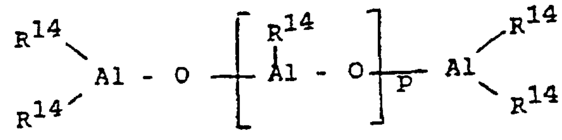 (II)

pour le type linéaire et/ou de la formule III

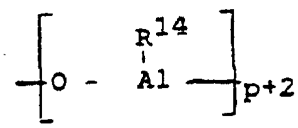 (III)

pour le type cyclique,

où dans les formules (II) et (III) les restes $R^{14}$ peuvent être identiques ou différents et représentent un radical alkyle en $C_1$ à $C_6$, un radical aryle en $C_6$ à $C_{18}$ ou de l'hydrogène, et p est un nombre entier de 2 à 50.

**5.** Procédé selon une ou plusieurs des revendications 1 à 4, où le métallocène est appliqué sur un support.

**6.** Procédé selon une ou plusieurs des revendications 1 à 5, où le métallocène est prépolymérisé.

**7.** Catalyseur constitué d'un métallocène en tant que composé de métal de transition et d'un cocatalyseur, où le cocatalyseur est un aluminoxane et/ou un composé de formule $R_xNH_{4-x}BR'_4$ ou de formule $R_3PHBR'_4$, où x = 1, 2 ou 3, R = alkyle ou aryle identiques ou différents, et R' = aryle, qui peut également être fluoré ou partiellement fluoré, le métallocène étant un composé de la formule Ia,

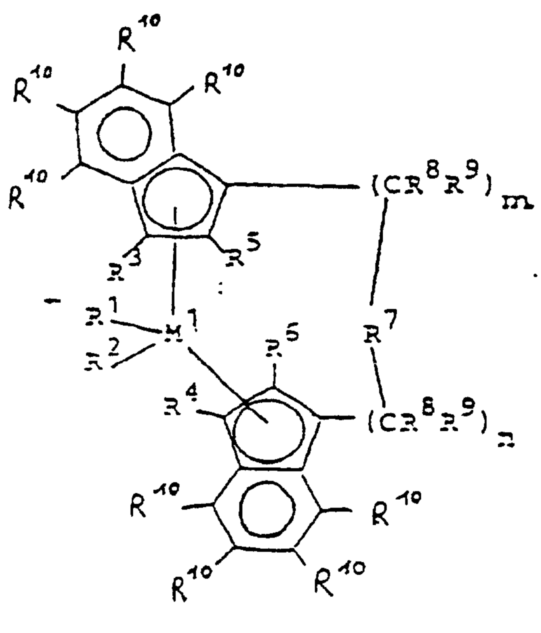 (Ia)

dans laquelle

$M^1$ représente un métal des groupes Ivb, Vb ou Vlb du système périodique,

$R^1$ et $R^2$ sont identiques ou différents et représentent un atome d'hydrogène, un radical alkyle en $C_1$ à $C_{10}$, un radical alcoxy en $C_1$ à $C_{10}$, un radical aryle en $C_6$ à $C_{10}$, un radical aryloxy en $C_6$ à $C_{10}$, un radical

alcényle en $C_2$ à $C_{10}$, un radical arylalkyle en $C_7$ à $C_{40}$, un radical alkylaryle en $C_7$ à $C_{40}$, un radical arylalcényle en $C_8$ à $C_{40}$, ou un atome d'halogène,

$R^3$ et $R^4$ sont identiques ou différents et représentent un atome d'hydrogène, un atome d'halogène, un radical alkyle en $C_1$ à $C_{10}$, qui peut être halogéné, un radical aryle en $C_6$ à $C_{10}$, un reste $-NR_2^{15}$, $-SR^{15}$, $-OSiR_3^{15}$, $-SiR_3^{15}$ ou $-PR_2^{15}$, où $R^{15}$ représente un atome d'halogène, un radical alkyle en $C_1$ à $C_{10}$ ou un radical aryle en $C_6$ à $C_{10}$,

$R^5$ et $R^6$ sont identiques ou différents et ont les significations indiquées pour $R^3$ et $R^4$, avec la condition que $R^5$ et $R^6$ ne soient pas de l'hydrogène, et

$R^7$ représente

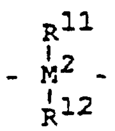 , 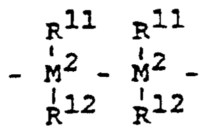 , 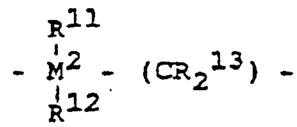 , 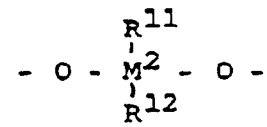

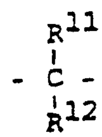 , 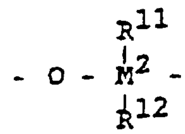

$=BR^{11}$, $=AlR^{11}$, -Ge-, -Sn-, -O-, -S-, =SO, $=SO_2$, $=NR^{11}$, =CO, $=PR^{11}$ ou $=P(O)R^{11}$,

$R^{11}$, $R^{12}$ et $R^{13}$ sont identiques ou différents et représentent un atome d'hydrogène, un atome d'halogène, un radical alkyle en Ci à $C_{10}$, un radical fluoroalkyle en $C_1$ à $C_{10}$, un radical aryle en $C_6$ à $C_{10}$, un radical fluoroaryle en $C_6$ à $C_{10}$, un radical alcoxy en $C_1$ à $C_{10}$, un radical alcényle en $C_2$ à $C_{10}$, un radical arylalkyle en $C_7$ à $C_{40}$, un radical arylalcényle en $C_8$ à $C_{40}$, un radical alkylaryle en $C_7$ à $C_{40}$, ou bien $R^{11}$ et $R^{12}$ ou R" et $R^{13}$ forment à chaque fois un noyau avec les atomes qui les relient,

$M^2$ représente le silicium, le germanium ou l'étain,

$R^8$ et $R^9$ sont identiques ou différents et ont la signification indiquée pour $R^{11}$,

m et n sont identiques ou différents et ont une valeur de zéro, 1 ou 2, avec m + n = zéro, 1 ou 2, et

les restes $R^{10}$ sont identiques ou différents et ont les significations indiquées pour $R^{11}$, $R^{12}$ et $R^{13}$, le métallocène n'étant pas du dichlorure d'éthylène-bis(2,3-diméthyl-1-indényl)zirconium.

**8.** Catalyseur selon la revendication 7, où dans le composé de la formule la, les restes $R^{10}$ sont identiques ou différents et représentent un atome d'hydrogène, un atome d'halogène, un radical alkyle en $C_1$ à $C_{10}$, un radical fluoroalkyle en $C_1$ à $C_{10}$, un radical aryle en $C_6$ à $C_{10}$, un radical fluoroaryle en $C_6$ à $C_{10}$, un radical alcoxy en $C_1$ à $C_{10}$, un radical alcényle en $C_2$ à $C_{10}$, un radical arylalkyle en $C_7$ à $C_{40}$, un radical arylalcényle en $C_8$ à $C_{40}$, un radical alkylaryle en $C_7$ à $C_{40}$, ou bien deux restes $R^{10}$ forment à chaque fois un noyau avec les atomes qui les relient.

**9.** Catalyseur selon la revendication 7 ou 8, où dans le composé de la formule la les restes $R^{10}$ représentent des atomes d'hydrogène ou un radical alkyle en $C_1$ à $C_{10}$.

**10.** Catalyseur selon une ou plusieurs des revendications 7 à 9, où le cocatalyseur est un aluminoxane de la formule (II)

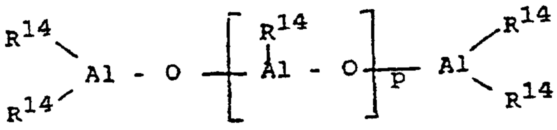 (II)

pour le type linéaire et/ou de la formule III

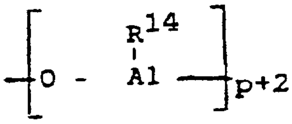 (III)

pour le type cyclique,

où dans les formules (II) et (III) les restes $R^{14}$ sont identiques ou différents et peuvent représenter un radical alkyle en $C_1$ à $C_6$, un radical aryle en $C_6$ à $C_{18}$ ou de l'hydrogène, et p est un nombre entier de 2 à 50.

**11.** Catalyseur selon une ou plusieurs des revendications 7 à 10, où le métallocène est appliqué sur un support.

**12.** Catalyseur selon une ou plusieurs des revendications 7 à 11, où le métallocène est prépolymérisé.

**13.** Utilisation d'un catalyseur selon une ou plusieurs des revendications 7 à 12 pour la polymérisation ou la copolymérisation d'une oléfine de la formule $R^a$-CH=CH-$R^b$, où $R^a$ et $R^b$ sont identiques ou différents et représentent un atome d'hydrogène ou un reste hydrocarboné comportant de 1 à 14 atomes de carbone, ou bien $R^a$ et $R^b$ peuvent former un noyau avec les atomes qui les relient.

**14.** Polymère d'oléfine que l'on peut obtenir par polymérisation ou copolymérisation d'une oléfine de la formule $R^a$-CH=CH-$R^b$, où $R^a$ et $R^b$ sont identiques ou différents et représentent un atome d'hydrogène ou un reste hydrocarboné comportant de 1 à 14 atomes de carbone, ou bien $R^a$ et $R^b$ peuvent former un noyau avec les atomes qui les relient, caractérisé en ce que la polymérisation est entreprise à une température de 30 à 80°C en présence d'un catalyseur selon la revendication 7.